# EUROPÄISCHE PATENTSCHRIFT

(11) **EP 1 403 168 B1**
(45) Veröffentlichungstag und Bekanntmachung des Hinweises auf die Patenterteilung: **26.10.2005**
(21) Anmeldenummer: 03021083.5
(22) Anmeldetag: 18.09.2003
(51) Int. Cl.: B62D 1/16, B62D 1/10, B60Q 1/14

(54) **Einrichtung zum Befestigen eines Mantelrohrschaltermoduls an dem Mantelrohr einer Lenkspindel eines Kraftfahrzeuges**
Device for fixing a tubular jacket switching module on the tubular jacket of a motor vehicle steering shaft
Dispositif de fixation d'un module interrupteur d'enveloppe tubulaire sur l'enveloppe tubulaire de l'arbre de direction d'un véhicule automobile

(30) Priorität: 24.09.2002 DE 10244245
(43) Veröffentlichungstag der Anmeldung: 31.03.2004
(73) Patentinhaber: Leopold Kostal GmbH & Co. KG, 58507 Lüdenscheid (DE)
(72) Erfinder: Hirschfeld, Klaus, 58515 Lüdenscheid (DE); Lettmann, Holger, 58840 Plettenberg (DE); Oster, Christoph, 58509 Lüdenscheid (DE); Kritzler, Dietmar, 58507 Lennestadt (DE)

(56) Entgegenhaltungen:
- EP-A- 1 108 637
- DE-A- 19 942 818
- US-B1- 6 318 756

## Beschreibung

Die Erfindung betrifft eine Einrichtung zum Befestigen eines Mantelrohrschaltermoduls an dem Mantelrohr einer Lenkspindel eines Kraftfahrzeuges. EP-A-1 108 637 offenbart solch eine Einrichtung, gemäß den Oberbegriff des Anspruchs 1.

Mantelrohrschaltermodule sind Schaltermodule, die im Bereich des Mantelrohrs der Lenkspindel eines Kraftfahrzeuges angeordnet sind. Diese Module tragen beispielsweise Lenkstockschalter und dergleichen. Je nach Ausgestaltung kann Teil des Mantelrohrschaltermoduls ebenfalls eine Wickelfederkassette, ein Winkelsensor oder dergleichen sein.

Das Mantelrohrschaltermodul ist in aller Regel konzentrisch zum Mantelrohr der Lenkspindel angeordnet und an diesem befestigt. Zum Befestigen eines solchen Mantelrohrschaltermoduls kann - wie in DE 199 42 247 C1 vorgesehen - ein Aussteifungs- und Kupplungsmodul dienen, das starr mit dem Mantelrohr verbunden ist. Dieses Modul umfaßt Verbindungselemente, an denen das Mantelrohrschaltermodul befestigbar ist, beispielsweise durch eine stabile Clipsverbindung. Bei dem Gegenstand dieses Dokumentes ist vorgesehen, dass zum Erstellen des gesamten Lenksäulenmoduls zunächst das Mantelrohrschaltermodul an dem Mantelrohr befestigt wird und dass anschließend auf das Mantelrohrschaltermodul durchgreifende Ende der Lenkspindel das Lenkrad montiert wird.

In anderen Ausgestaltungen ist das Mantelrohrschaltermodul durch Schellen oder axiale Befestigungsmittel an dem Mantelrohr gehalten.

Aus DE 199 42 818 A1 ist ein weiteres Mantelrohrschaltermodul bekannt, das im Gegensatz zu dem zuvor beschriebenen Stand der Technik nicht am Mantelrohr sondern am Lenkrad befestigt ist. Gegenüber dem Lenkrad selbst ist dieses Mantelrohrschaltermodul drehentkoppelt. Zur Verdrehsicherung ist das Mantelrohrschaltermodul drehfest am Mantelrohr gehalten, beispielsweise durch Aufsetzen auf einen Zapfen. Vorteilhaft ist bei dieser Ausgestaltung, dass an der Schnittstelle Lenkrad, Mantelrohrschaltermodul keine Toleranzen ausgeglichen werden müssen. Dies hat zur Folge, dass ein Bewegungsspalt zwischen dem Lenkrad und dem Mantelrohrschaltermodul unabhängig von den sich einstellenden Toleranzen regelmäßig gleich bemessen ist. Von Vorteil bei dem Gegenstand dieses Dokumentes ist ferner, dass das Mantelrohrschaltermodul nicht durch zusätzliche Montagemaßnahmen am Mantelrohr befestigt werden muß.

Es hat sich jedoch gezeigt, dass bevorzugt solche Mantelrohrschaltermodule eingesetzt werden, die unmittelbar am Mantelrohr befestigt sind. Gleichwohl besteht der Wunsch, ein solches Mantelrohrmodul ohne zusätzliche Maßnahmen mit dem Anbringen bzw. Befestigen des Lenkrades an der Lenkspindel am Mantelrohrschaltermodul befestigen zu wollen.

Der Erfindung liegt daher die Aufgabe zugrunde eine solche Einrichtung bereitzustellen.

Diese Aufgabe wird erfindungsgemäß dadurch gelöst, dass die Einrichtung ein Klemmglied zum Festlegen des Mantelrohrschaltermoduls, das in einer koaxialen Anordnung zwischen dem Mantelrohr und dem Mantelrohrschaltermodul, eine Klemmkraft in radialer Richtung ausübend, angeordnet ist, sowie ein Lager zur Drehentkopplung des Lenkrades gegenüber dem Mantelrohrschaltermodul umfaßt, wobei über die Statorseite des Lagers eine Klemmkraft auf das Klemmglied übertragen wird und die Statorseite des Lagers zum Übertragen der Klemmkraft auf das Klemmglied durch Erzeugen einer Relativbewegung zwischen dem Mantelrohrschaltermodul und dem Mantelrohr wirkt, damit durch diese Relativbewegung das Klemmglied zum Aufbringen der Klemmkraft unter Vorspannung gestellt wird.

Bei dieser Einrichtung befindet sich in einer radialen bzw. in einer radial wirkenden Anordnung zwischen dem Mantelrohr und dem Mantelrohrschaltermodul bzw. einem dem Mantelrohrschaltermodul zugeordneten Träger ein Klemmglied. Über das Klemmglied, welches grundsätzlich auch eine aus mehreren Elementen bestehende Klemmgliedanordnung sein kann, erfolgt eine Verklemmung des Mantelrohrschaltermoduls mit radial wirkenden Klemmkräften. Zum Aufbringen der gewünschten Klemmkraft zum Verklemmen des Klemmgliedes zwischen dem Mantelrohr und dem Mantelrohrschaltermodul wird das Mantelrohrschaltermodul insgesamt in axialer Richtung gegenüber dem Mantelrohr bewegt. Bei dieser Bewegung zum Festsetzen des Mantelrohrschaltermoduls an dem Klemmglied, das sich seinerseits an der Außenseite des Mantelrohrschaltermoduls abstützt, wirkt mittelbar oder unmittelbar die Statorseite des Lagers, an dem rotorseitig das Lenkrad bzw. die Lenkradnabe anliegt, auf das Mantelrohrschaltermodul. Somit befinden sich beim Gegenstand dieser Einrichtung zwischen dem Lenkrad und dem Mantelrohrschaltermodul grundsätzlich keine einem Toleranzausgleich dienenden Elemente, so dass der zwischen dem Lenkrad und dem Mantelrohrschaltermodul befindliche Spalt unabhängig von unterschiedlichen, sich einstellenden Toleranzen gleich weit bemessen ist. Der Toleranzausgleich erfolgt beim Gegenstand dieser Einrichtung in dem unteren, von dem Lenkrad wegweisenden Bereich des Mantelrohrschaltermoduls. Durch die radiale Anordnung des Klemmgliedes zwischen dem Manterohrschaltermodul und dem Mantelrohr mit seiner in radialer Richtung wirkenden Klemmkraft ist es möglich, sowohl die notwendige axiale Befestigung als auch die benötigte Verdrehsicherung herbeizuführen.

Da bei der beschriebenen Einrichtung das Klemmglied durch eine axiale Relativbewegung zwischen dem Mantelrohr und dem Mantelrohrschaltermodul unter Vorspannung gestellt wird, erfolgt eine Festlegung des Mantelrohrschaltermoduls quasi durch Verkeilen der Elemente miteinander. Zum Erzielen der gewünschten Klemmkraft braucht somit zwischen dem Mantelrohrschaltermodul und dem Mantelrohr nur ein geringer Klemmspalt, in dem das Klemmglied angeordnet ist, vorhanden zu sein.

Die zum Vorspannen des Klemmgliedes benötigte axiale Bewegung zwischen dem Mantelrohrschaltermodul und dem Mantelrohr resultiert aus der über das Lager beim Montieren des Lenkrades übertragenen axialen Bewegung des Lenkrades beim Festschrauben desselben auf dem freien Ende der Lenkspindel. Somit erfolgt ein Festlegen des Mantelrohrschaltermoduls am Mantelrohr beim Anbringen des Lenkrades. In diesem Zusammenhang kann vorgesehen sein, dass das Mantelrohrschaltermodul gleichzeitig mit dem Lenkrad auf das freie Ende der Lenksäule aufgesteckt wird und an dem Mantelrohr durch Anziehen der Lenkradschraube festgelegt wird. Vorgesehen sein kann ebenfalls, dass das Mantelrohrschaltermodul zunächst auf das freie Ende der Lenksäule aufgesetzt wird und dass die eigentliche Festlegung des Mantelrohrschaltermoduls am Mantelrohr erst dann erfolgt, wenn das Lenkrad an dem freien Ende der Lenkspindel befestigt wird. Dies kann sinnvoll sein, wenn zwischen dem Schritt des Aufsetzens des Mantelrohrschaltermoduls und dem Schritt des Befestigen des Lenkrades an dem freien Ende der Lenkspindel weitere Montageschritte vorgenommen werden sollen.

In einer zweckmäßigen Ausgestaltung ist das Klemmglied ein hülsenförmiger, konzentrisch zum Mantelrohr angeordneter Klemmkörper mit zumindest zwei durch Schlitze voneinander getrennten Klemmzungen. Die Klemmzungen weisen zweckmäßigerweise eine konzentrisch zur Mantelrohr verlaufende Krümmung auf und sind aus diesem Grunde relativ steif, können jedoch bei einer radialen Kraftbeaufschlagung elastisch deformiert werden, so dass über solche Klemmzungen eine sehr hohe Klemmkraft aufgebracht werden kann. Die Klemmzungen sind ausgebildet, damit sich diese einerseits auf der Außenseite des Mantelrohrs und andererseits auf der Innenseite des Mantelrohrschaltermoduls abstützen können. Die beiden Klemmbereiche sind in axialer Richtung voneinander beabstandet, wobei zweckmäßigerweise vorgesehen ist, dass das untere freie Ende zum Ausbilden des Abstützbereiches an der Innenseite des Mantelrohrschaltermoduls nach außen ausgestellt ist. Somit wirkt dieser nach außen ausgestellte Abschnitt der Klemmzungen als Auflaufschräge, durch die beim Verschieben des Mantelrohrschaltermoduls in axialer Richtung gegenüber dem Mantelrohr die Klemmzungen infolge ihrer Abstützung an der Mantelfläche des Mantelrohrs unter die gewünschte Vorspannung gestellt werden. Damit sich bei dieser axialen Bewegung das Klemmglied ortsfest gegenüber dem Mantelrohrschaltermodul in Bewegungsrichtung gehalten ist, ist das Klemmglied über einen Anschlag ortsfest gegenüber dem Mantelrohrschaltermodul in Montagerichtung desselben gehalten. Ein solcher Anschlag kann beispielsweise durch einen radial nach innen vorstehenden Anschlagflansch des Klemmkörpers gebildet sein, der sich an der zum Lenkrad weisenden Stirnfläche des Mantelrohrs abstützt.

Die Befestigungseinrichtung ist ohne weiteres auch wieder von dem Mantelrohr lösbar, ohne dass beim Montieren oder Demontieren des Mantelrohrschaltermoduls Verschleißerscheinungen an dem Klemmglied in Erscheinung treten würden. Zu diesem Zweck wird das Mantelrohrschaltermodul entgegen seiner Montagerichtung von dem Klemmglied abgezogen. Zum Unterstützen einer solchen Demontage kann es zweckmäßig sein, eine diese Bewegung unterstützende Druckfeder vorzusehen. Diese stützt sich mit ihrem einen Ende an einem, beispielsweise durch einen Flansch gebildeten Widerlager des Klemmgliedes sowie an dem Mantelrohrschaltermodul ab. Bei der Montage des Mantelrohrschaltermoduls wird die Druckfeder vorgespannt, so dass sich diese bei einer gewünschten Demontage und einem Lösen des Lenkrades von der Lenkspindel bestrebt ist zu entspannen um auf diese Weise das Mantelrohrschaltermodul von dem Klemmglied wegzudrücken.

In einer Weiterbildung ist vorgesehen, dass das Klemmglied bzw. der Klemmkörper einen zur Mantelfläche des Mantelrohrs weisenden Wulst oder Nocken trägt, der zum Bereitstellen einer Montagehaptik in eine Öffnung des Mantelrohrs eingreift, um auf diese Weise einem Werker die richtige Montageposition zu signalisieren.

In einer weiteren Ausgestaltung der Erfindung ist vorgesehen, dass zum Bereitstellen der benötigten radialen Klemmkraft ein oder mehrere deformierbare, zweckmäßigerweise elastisch deformierbare Ringkörper als Klemmglied bzw. Klemmglieder eingesetzt sind. Bei dieser Ausgestaltung erfolgt ein Umsetzen der axialen Spannbewegung in die gewünschte radiale Klemmkraft durch Deformieren dieser Ringkörper. In noch einer weiteren Ausgestaltung dient zum Umlenken der beim Montieren des Lenkrades ausgeübten und an das Mantelrohrschaltermodul übertragenen axialen Bewegung in eine radial wirkende Klemmkraft als Klemmglied eine Kugelanordnung, beispielsweise dergestalt, dass die Kugeln als Widerlager zum Ausstellen von Klemmfortsätzen dienen oder etwa dass die Kugeln selbst unmittelbar über eine Stellschräge bei einer solchen axialen Bewegung ausgestellt werden.

Nachfolgend ist die Erfindung anhand eines Ausführungsbeispiels unter Bezugnahme auf die beigefügten Figuren beschrieben. Es zeigen:
- **Fig. 1:**: einen Längsschnitt durch das obere Ende eines Lenksäulenmoduls mit einem Mantelrohrschaltermodul,
- **Fig. 2:**: eine vergrößerte Darstellung des in Figur 1 gekennzeichneten Ausschnittes und
- **Fig. 3:**: eine Ansicht eines Klemmkörpers zum Befestigen des Mantelrohrschaltemoduls.

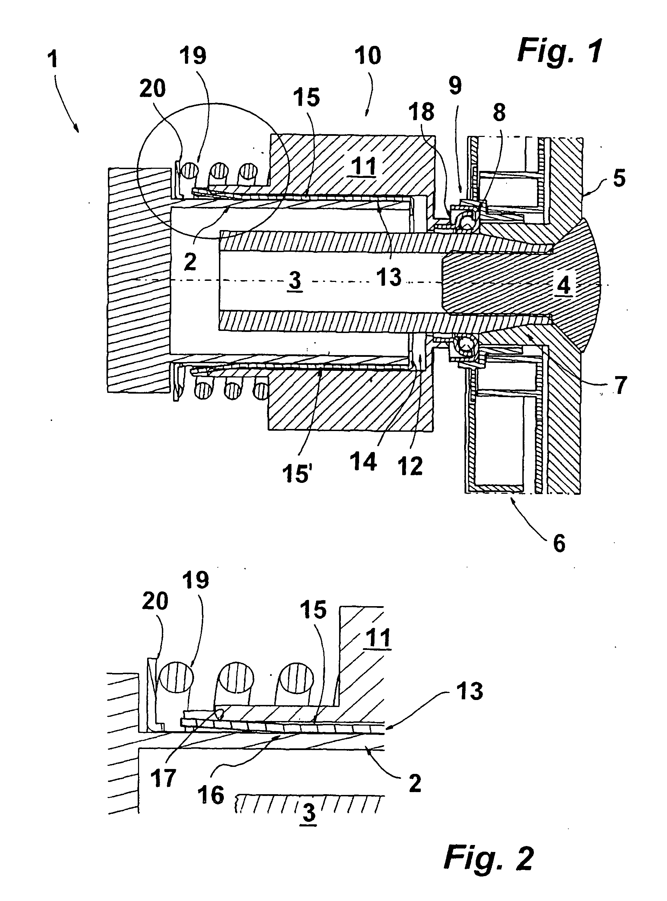

Ein insgesamt mit den Bezugszeichen 1 bezeichnetes Lenksäulenmodul für ein Kraftfahrzeug umfaßt eine in einem Mantelrohr 2 drehbar gelagerte Lenkspindel 3. An dem freien Ende der Lenkspindel 3 ist mittels einer Lenkradschraube 4 ein Lenkrad befestigt, von dem in Figur 1 lediglich die Lenkradnabe 5 gezeigt ist. Bei dem dargestellten Ausführungsbeispiel ist Teil des Lenkrades eine Wickelfederkassette 6. Der Lenkradnabe 5 zugehörig ist eine Montagehülse 7, in die das freie Ende der Lenkspindel 3 eingesetzt ist. Die freie Stirnfläche der Montagehülse 7 liegt an der Rotorseite 8 eines Lagers 9 an. Das Lager 9 ist konzentrisch zur Lenkspindel 3 angeordnet.

Das Lenksäulenmodul 1 umfaßt ferner ein Mantelrohrschaltermodul 10, von dem in Figur 1 lediglich der Träger 11 dargestellt ist. Der Träger 11 des Mantelrohrschaltermoduls 10 umgibt das Mantelrohr 2 im Bereich seines oberen Abschlusses konzentrisch. Der Träger 10 umfaßt zu diesem Zweck eine buchsenförmige Aufnahme 12, in die das freie Ende des Mantelohrs 3 eingreift. Dabei ist vorgesehen, dass die lichte Weite der Aufnahme 12 unter Belassung eines Spaltes größer ist als der Durchmesser des Mantelrohrs 2 im Bereich seines in die Aufnahme 12 hineinreichenden Abschnittes. Dieser Spalt ist vorgesehen, um zwischen dem Mantelrohr 2 und dem Träger 11 des Mantelrohrschaltermoduls einen hülsenförmigen Klemmkörper 13 anzuordnen. Der Klemmkörper 13 umgibt das Mantelrohr 3 konzentrisch und weist an seinem zum Lenkrad bzw. zur Lenkradnabe 5 weisenden Ende einen radial nach innen vorspringenden Anschlagflansch 14 auf. Dieser Anschlagflansch 14 stützt sich ab auf der zur Lenkradnabe 5 weisenden Stirnfläche des Mantelrohrs 2. Der Klemmkörper 13 ist zur Ausbildung von mehreren Klemmzungen 15, 15' mehrfach in axialer Richtung geschlitzt. Die Klemmzungen, von denen in Figur 1 zwei Klemmzungen 15, 15' erkennbar sind, dienen zum Bereitstellen einer in radialer Richtung wirkenden Klemmkraft zum Festsetzen des Trägers 11 des Mantelrohrschaltermoduls 10 an dem Mantelrohr 2. Die Erläuterung der Verklemmung erfolgt unter Bezugnahme auf die vergrößerte Darstellung des Endbereiches der Klemmzunge 15 der Figur 2. Die Klemmzunge 15 des Klemmkörpers 13 ist an ihrem von der Lenkradnabe 5 wegweisenden Ende radial nach außen ausgestellt. Da es sich bei dem Klemmkörper 13 um einen hülsenförmigen Körper handelt, ist die Klemmzunge 15 in Umfangsrichtung gekrümmt. Durch das Ausstellen der Klemmzunge 15 werden zwei Klemmbereiche gebildet, die in Figur 1 mit den Bezugszeichen 16, 17 gekennzeichnet sind. Der Klemmbereich 16 ist gebildet durch die Abkantung zum Herbeiführen des ausgestellten Habitus der Klemmzunge 15 und liegt an der Mantelfläche des Mantelrohrs 2 an. Der andere Klemmbereich 17 ist gebildet durch die Anlage der Außenseite der Klemmzunge 15 an der Innenseite des Trägers 11 im Bereich seiner von der Lenkradnabe 5 wegweisenden vorderen Stirnfläche. Diese ist zu diesem Zweck gerundet ausgebildet. In der in Figur 2 gezeigten montierten Stellung des Mantelrohrschaltermoduls 10 auf dem Mantelrohr 2 steht der ausgestellte Abschnitt der Klemmzunge 15 unter Vorspannung, so dass über die Klemmbereiche 16, 17 der Träger 11 und somit das gesamte Mantelrohrschaltermodul 10 verklemmt an dem Mantelrohr 2 gehalten ist. Die Steifigkeit der Klemmzunge 15 infolge ihrer in Umfangsrichtung gesehenen Krümmung ist gewünscht, um auf diese Weise eine hohe Klemmkraft zwischen den beiden Elementen - Mantelrohr 2 und Träger 11 - bereitstellen zu können.

Das Mantelrohrschaltermodul 10 mit seinem Träger 11 wird beim Montieren des Lenkrades in die in Figur 2 gezeigte montierte und mit dem Mantelrohr 2 verklemmte Position gebracht. Beim Montieren des Lenkrades wird über die Lenkradnabe 5 eine axiale Bewegung zum Mantelrohr 2 hin vollzogen. Diese axiale und zur Montage des Lenkrades notwendige Bewegung wird über das Lager 9 auf den Träger 11 des Mantelrohrschaltermoduls 10 übertragen, der zu diesem Zweck an der Statorseite 18 des Lagers 9 anliegt. Somit wird bei einer Montage des Lenkrades die axiale Montagebewegung auf den Träger 11 des Mantelrohrschaltermoduls 10 übertragen, wobei dieser mit seiner von der Lenkradnabe 5 wegweisenden inneren gerundeten Kante zur Anlage an der Außenseite der ausgestellten Abschnitte der Klemmzungen 15, 15' gebracht wird und diese zur Mantelfläche des Mantelrohrs 2 hin bewegt. Durch diese Bewegung werden die Klemmzungen 15, 15' durch ihre Abstützung über die Klemmbereiche 16, 17 unter Vorspannung gestellt. Eine gleichermaßen vollzogene axiale Bewegung durch den Klemmkörper 13 ist durch den an der zur Lenkradnabe 5 weisenden Stirnfläche des Mantelrohrs 2 anliegenden Anlageflansch 14 verhindert. Die auf diese Weise in die Klemmzungen 15, 15' induzierte Klemmkraft wirkt in radialer Richtung, so dass durch diese wirksame Verklemmung der Träger 11 und somit das gesamte Mantelrohrschaltermodul 10 sowohl in axialer als auch in radialer Richtung sicher an dem Mantelrohr 2 befestigt ist.

Eine Demontage des Mantelrohrschaltermoduls 10 erfolgt auf umgekehrte Weise, wobei nach einer Demontage des Lenkrades von der Lenkspindel 3 das Mantelrohrschaltermodul 10 mit seinem Träger 11 von dem Klemmkörper 13 in axialer Richtung abgezogen wird. Zum Unterstützen einer solchen Demontagebewegung und somit zum Unterstützen eines Lösens der bewirkten Verklemmung zwischen dem Träger 11 und dem Klemmkörper 13 ist eine Rückstellfeder 19 vorgesehen, die sich mit ihrem einen Ende an einem ringförmig flanschartigen Absatz 20 des Klemmkörpers 13 und mit ihrem anderen Ende an dem Träger 11 abstützt. Die Rückstellfeder wird bei dem Montagevorgang unter Vorspannung gesetzt, so dass bei einem Lösen des Lenkrades das Abziehen des Mantelrohrschaltermoduls 10 von dem Mantelrohr 2 bzw. dem Klemmkörper 13 erleichtert ist.

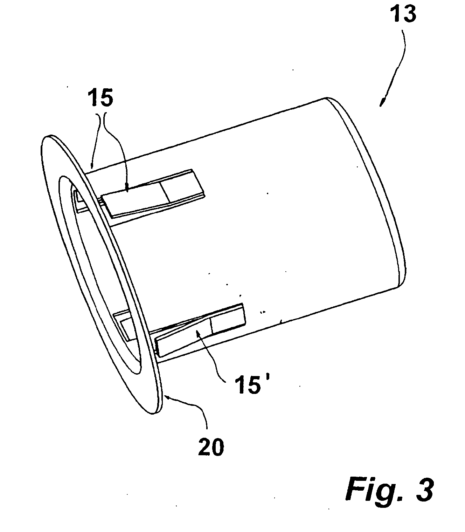

Der Klemmkörper 13 ist in einer Ansicht nochmals in Figur 3 gezeigt.

In einer Weiterbildung des in den Figuren dargestellten Ausführungsbeispiels ist zusätzlich zwischen dem Mantelrohrschaltermodul und dem Mantelrohr eine Verdrehsicherung realisiert. Zu diesem Zweck befindet sich zumindest eine der Klemmzungen des Klemmgliedes vor dem Festlegen des Mantelrohrschaltermoduls radial außerhalb einer außenseitig in das Mantelrohr eingebrachten Ausnehmung. Beim Ausüben der Spannbewegung wird die Klemmzunge in diese Ausnehmung eingedrückt, deren Weite im wesentlichen der Breite einer Klemmzunge entspricht. Durch das Eingreifen der Klemmzunge in die Ausnehmung ist eine wirksame Verdrehsicherung bereitgestellt. Anstelle eines Eindrückens von Teilen der Klemmzunge kann ebenfalls vorgesehen sein, dass zur Realisierung einer Verdrehsicherung an einer solchen Klemmzunge ein radial abragender Wulst vorgesehen ist, der beim Durchführen der Axialbewegung in eine entsprechende Ausnehmung des Mantelrohrs eingreift. Die Ausnehmungen des Mantelrohrs weisen eine gewisse axiale Erstreckung auf; ihre Weite entspricht jedoch im wesentlichen der Breite des in die Aufnahme einzubringenden Elementes.

### Bezugszeichenliste

- 1: Lenksäulenmodul
- 2: Mantelrohr
- 3: Lenkspindel
- 4: Lenkradschraube
- 5: Lenkradnabe
- 6: Wickelfederkassette
- 7: Montagehülse
- 8: Rotorseite
- 9: Lager
- 10: Mantelrohrschaltermodul
- 11: Träger
- 12: Aufnahme
- 13: Klemmkörper
- 14: Anschlagflansch
- 15, 15': Klemmzunge
- 16: Klemmbereich
- 17: Klemmbereich
- 18: Statorseite
- 19: Rückstellfeder
- 20: Absatz

## Patentansprüche

1. Einrichtung zum Befestigen eines Mantelrohrschaltermoduls (10) an dem Mantelrohr (2) einer Lenkspindel (3) eines Kraftfahrzeuges beim Anbringen des Lenkrades an der Lenkspindel (3), **dadurch gekennzeichnet, dass** die Einrichtung ein Klemmglied (13) zum Festlegen des Mantelrohrschaltermoduls (10), das in einer koaxialen Anordnung zwischen dem Mantelrohr (2) und dem Mantelrohrschaltermodul (10), eine Klemmkraft in radialer Richtung ausübend, angeordnet ist, sowie ein Lager (9) zur Drehentkopplung des Lenkrades gegenüber dem Mantelrohrschaltermodul (10) umfaßt, wobei über die Statorseite (18) des Lagers (9) eine Klemmkraft auf das Klemmglied (13) übertragen wird und die Statorseite (18) des Lagers (9) zum Übertragen der Klemmkraft auf das Klemmglied durch Erzeugen einer Relativbewegung zwischen dem Mantelrohrschaltermodul (10) und dem Mantelrohr (2) wirkt, damit durch diese Relativbewegung das Klemmglied (13) zum Aufbringen der Klemmkraft unter Vorspannung gestellt wird.

2. Einrichtung nach Anspruch 1, **dadurch gekennzeichnet, dass** das Klemmglied ein hülsenförmiger, konzentrisch zum Mantelrohr (2) angeordneter Klemmkörper (13) mit zumindest zwei Klemmzungen (15, 15') ist.

3. Einrichtung nach Anspruch 2, **dadurch gekennzeichnet, dass** die Klemmzungen (15, 15') zumindest abschnittsweise ausgestellt sind oder in radialer Richtung wirkende Klemmwulste aufweisen.

4. Einrichtung nach Anspruch 1, **dadurch gekennzeichnet, dass** als Klemmglied ein elastischer, das Mantelrohr konzentrisch umgebender Ringkörper vorgesehen ist, der infolge der axialen Relativbewegung diese Axialbewegung durch radiales Ausweichen zum Verklemmen des Mantelrohrschaltermoduls an dem Mantelrohr ausweicht.

5. Einrichtung nach Anspruch 1, **dadurch gekennzeichnet, dass** als Klemmglied eine Kugelanordnung vorgesehen ist.

6. Einrichtung nach einem der Ansprüche 1 bis 3, **dadurch gekennzeichnet, dass** das Klemmglied (13) an seinem zum Lenkrad weisenden Ende einen radial nach innen vorstehenden Anschlagflansch (14) trägt, mit dem sich das Klemmglied (13) an der zum Lenkrad weisenden Stirnfläche des Mantelrohrs (2) abstützt.

7. Einrichtung nach einem der Ansprüche 1 bis 3 und 6, **dadurch gekennzeichnet, dass** die Einrichtung eine mit ihrer Kraft der Relativbewegung zwischen dem Mantelrohrschaltermodul (10) und dem Klemmgied (13) entgegenwirkend angeordnete Rückstellfeder (19) umfasst.

8. Einrichtung nach Anspruch 7, **dadurch gekennzeichnet, dass** das Klemmglied (13) über einen ringförmigen Absatz (20) verfügt, an dem sich die Rückstellfeder (19) abstützt.

9. Einrichtung nach einem der Ansprüche 1 bis 3 und 6 bis 8, **dadurch gekennzeichnet, dass** die vordere, vom Lenkrad wegweisende, zum Mantelrohr (2) gerichtete innere Kante des Mantelrohrschaltermoduls (10) gerundet ist.

## Claims

1. Facility for securing a steering column tube switch module (10) to the steering column tube (2) of a steering shaft (3) of a motor vehicle when attaching the steering wheel to the steering shaft (3), **characterised by** the fact that the facility is a clamping element (13) for fixing the steering column tube switch module (10) in place, arranged in a coaxial arrangement between the steering column tube (2) and the steering column tube switch module (10), exercising a clamping force in the radial direction, and also comprises a bearing (9) for rotationally decoupling the steering wheel against the steering column tube switch module (10), with a clamping force being transmitted to the clamping element (13) by way of the stator side (18) of the bearing (9), and the stator side (18) of the bearing acting to transmit the clamping force to the clamping element (13) by generating a relative movement between the steering column tube switch module (10) and the steering column tube (2) so that, as a result of this relative movement, the clamping element is pre-stressed in order to apply the clamping force.

2. Facility in accordance with Claim 1, **characterised by** the fact that the clamping part is a sleeve-shaped, clamping element (13) with at least two clamping tongues (15, 15') that is arranged concentrically to the steering column tube (2).

3. Facility in accordance with Claim 2, **characterised by** the fact that the clamping tongues (15, 15') are flared at least section-wise, or feature clamping beads that act in the radial direction.

4. Facility in accordance with Claim 1, **characterised by** the fact that an elastic annular element concentrically encompassing the steering column tube (2) is provided as the clamping part which, as a result of the axial relative movement, evades this axial movement by radial deflection in order to clamp the steering column tube switch module to the steering column tube.

5. Facility in accordance with Claim 1, **characterised by** the fact that a spherical arrangement is provided as a clamping element.

6. Facility in accordance with any of Claims 1 to 3, **characterised by** the fact that the clamping element (13) supports on its end facing towards the steering wheel a stopping flange (14) that projects radially inwards, with which the clamping element (13) is supported on the frontal area of the steering column tube (2) facing the steering wheel.

7. Facility in accordance with any of Claims 1 to 3 and 6, **characterised by** the fact that the facility comprises a restoring spring (19) arranged to counteract the relative movement between the steering column tube switch module (10) and the clamping element (13) with its force.

8. Facility in accordance with Claim 7, **characterised by** the fact that the clamping element (13) is provided with a ring-shaped shoulder (20) on which the restoring spring (19) is supported.

9. Facility in accordance with any of Claims 1 to 3 and 6 to 8, **characterised by** the fact that the front inner edge of the steering column tube switch module (10) facing the steering column tube (2) and facing away from the steering wheel is rounded.

## Revendications

1. Dispositif pour la fixation d'un module de commutation pour tube enjoliveur (10) au tube enjoliveur (2) de l'arbre de direction (3) d'un véhicule automobile lors du montage du volant sur l'arbre de direction (3), **caractérisé en ce que** le dispositif comprend un organe de serrage (13) pour la fixation du module de commutation pour tube enjoliveur (10), lequel est disposé en arrangement coaxial entre le tube enjoliveur (2) et le module de commutation pour tube enjoliveur (10), en exerçant une force de serrage dans la direction axiale, ainsi qu'un palier (9) pour le désaccouplement en rotation du volant par rapport au module de commutation pour tube enjoliveur (10), une force de serrage étant transmise à l'organe de serrage (13), par le côté stator (18) du palier (9), et le côté stator (18) du palier (9), pour la transmission de la force de serrage sur l'organe de serrage, agissant en générant un mouvement relatif entre le module de commutation pour tube enjoliveur (10) et le tube enjoliveur (13) afin que, par ce mouvement relatif, l'organe de serrage soit mis sous précontrainte pour l'application de la force de serrage.

2. Dispositif selon la revendication 1, **caractérisé en ce que** l'organe de serrage est un corps de serrage (13) en forme de douille, disposé concentriquement par rapport au tube enjoliveur (2), avec au moins deux languettes de serrage (15, 15').

3. Dispositif selon la revendication 2, **caractérisé en ce que** les languettes de serrage (15, 15') sont orientées vers l'extérieur, au moins par sections, ou présentent des renflements de serrage qui agissent dans la direction radiale.

4. Dispositif selon la revendication 1, **caractérisé en ce que,** comme organe de serrage, est prévu un corps annulaire élastique, entourant le tube enjoliveur concentriquement, qui, à la suite du mouvement relatif axial, évite ce mouvement axial par déviation radiale, pour serrer le module de commutation sur le tube enjoliveur.

5. Dispositif selon la revendication 1, **caractérisé en ce que**, comme organe de serrage, un agencement de billes est prévu.

6. Dispositif selon l'une des revendications 1 à 3, **caractérisé en ce que** l'organe de serrage (13) porte, à son extrémité orientée vers le volant, une bride de butée (14) en saillie vers l'intérieur, dans la direction radiale, au moyen de laquelle l'organe de serrage (13) prend appui sur la surface frontale du tube enjoliveur (2) dirigée vers le volant.

7. Dispositif selon l'une des revendication 1 à 3 et 6, **caractérisé en ce que** ledit dispositif comprend un ressort de rappel (19) dont la force réagit contre le mouvement relatif entre le module de commutation pour tube enjoliveur (10) et l'organe de serrage (13).

8. Dispositif selon la revendication 7, **caractérisé en ce que** le l'organe de serrage (13) dispose d'un épaulement (20) en forme d'anneau, sur lequel prend appui le ressort de rappel (19).

9. Dispositif selon l'une des revendication 1 à 3 et 6 à 8, **caractérisé en ce que** le bord intérieur, avant du module de commutation pour tube enjoliveur (10), dirigé à l'opposé du volant de direction et orienté vers le tube enjoliveur (2), est arrondi.
